# EUROPÄISCHE PATENTANMELDUNG

(11) **EP 0 992 396 A2**
(43) Veröffentlichungstag der Anmeldung: **12.04.2000**
(21) Anmeldenummer: 99111034.7
(22) Anmeldetag: 11.06.1999
(51) Int. Cl.: B60P 1/00

(54) **Baueinheit für fahrbare Anhänger**

(30) Priorität: 09.10.1998 DE 29818105 U
(71) Anmelder: Fliegl, Josef, 84513 Töging (DE)
(72) Erfinder: Fliegl, Josef, 84513 Töging (DE)
(74) Vertreter: Seidel, Herta, Dipl.-Phys.

(57) **Zusammenfassung**

Baueinheit für einen fahrbaren Anhänger mit einer Bodenfläche (3) mit einer relativ zu dieser in ihrer Längsrichtung verschiebbaren Stirnwand (10) und mit Betätigungseinrichtungen (4,5,12,13,20,21) für die Verschiebung der Stirnwand (10) relativ zur Bodenfläche (3) einerseits und für die Verschiebung der Bodenfläche (3) relativ zu der Bodenfläche eines Anhängers, mit dem die Baueinheit verbindbar ist.

## Beschreibung

Die Erfindung betrifft eine Baueinheit für fahrbare Anhänger von Schleppern, Traktoren und ähnlichen Zugmaschinen, sowie einen fahrbaren Anhänger, in dem die Baueinheit integriert ist.

Man kennt bereits Anhänger, die als Abschiebeanhänger bezeichnet werden, bei denen das auf der starr mit dem Fahrgestell verbundenen Bodenfläche liegende Ladegut durch Verschieben der relativ zur Bodenfläche bewegbaren Stirnwand in Richtung zu dem in Fahrtrichtung des Anhängers gesehen hinteren Ende nach Entfernen oder Verschwenken seiner Rückwand entleert werden kann.

Die Verschiebung der Stirnwand muß dabei längs der gesamten Ladefläche des Anhängers von etwa 5 bis 6 m erfolgen. Hierfür sind sogenannte Teleskopzylinder erforderlich, deren erforderlicher langer Hub, nämlich bedingt durch die Länge der Ladefläche, dazu führt, dass in ausgefahrenem Zustand sich die Kolbenstange in der Mitte verbiegt. Infolge dieser Verbiegungen wird der Zylinder im Laufe der Zeit undicht und muß ausgewechselt werden. Teleskopzylinder sind aber sehr teuer. Darüberhinaus erfordert der Teleskopzylinder eine hohe Leistung der Hydraulikpumpe des Schleppers, da stets das gesamte Ladegut zum hinteren Ende des Anhängers hin verschoben werden muß. Solche leistungshohen Hydraulikanlagen sind aber nicht bei allen im Einsatz befindlichen Schleppern oder Traktoren vorhanden.

Ferner hat es sich gezeigt, dass bei den bekannten Abschiebeanhängern mit einer beweglichen Stirnwand für das Entladen des Ladegutes, durch die Länge der Ladefläche bedingt, das Ladegut beim Abschiebebeginn sich in der Mitte aufstaut. Dies führt bei vollständig gefüllten Anhängern dazu, dass das Ladegut über die Seitenwände des Anhängers rechts und links überläuft.

Auch beim Beladen zeigt der bekannte Abschiebeanhänger Nachteile. Soll dieser beispielsweise mit einer Palette beladen werden, dann kann diese Palette nur von hinten, also bei entfernter Rückwand auf die Bodenfläche aufgesetzt werden. Da sich diese Palette aber nicht auf der Bodenfläche verschieben lässt, beschränkt sich der Beladevorgang auf das Aufsetzen dieser einen Palette. Die übrige Ladefläche bleibt frei.

Der Bedarf nach einem verbesserten Abschiebeanhänger, bei dem die vorstehend beschriebenen Nachteile nicht mehr in Kauf genommen werden müssen, ist daher vorhanden. Die Anschaffung eines solchen verbesserten Anhängers ist aber in vielen Fällen aus Kosten- und/oder aus Platzgründen unerwünscht.

Der Erfindung liegt daher die Aufgabe zugrunde, eine Baueinheit zu schaffen, die mit jedem bereits vorhandenem Anhänger in sehr einfacher Weise verbunden werden kann und die dazu geeignet ist, den vorhandenen Anhänger zu einem Abschiebeanhänger mit verbesserten Eigenschaften nachzurüsten.

Diese Aufgabe wird durch eine Baueinheit gemäß den Merkmalen des Anspruches 1 gelöst.

Sobald die erfindungsgemäße Baueinheit mit der festen Bodenfläche des vorhandenen Anhängers verbunden ist, ist dieser zu einem Verschiebeanhänger mit den gewünschten verbesserten Eigenschaften geworden. Die Konstruktion der Baueinheit ist dabei so gewählt, dass die Umrüstung des vorhandenen Anhängers ohne Schwierigkeiten dadurch erfolgen kann, dass die für die Verschiebung der Bodenfläche der Baueinheit vorgesehene Betätigungsvorrichtung an der festen Bodenfläche des Anhängers nur angelenkt wird.

Der Abschiebeanhänger kann aufgrund der Konstruktion der erfindungsgemäßen Baueinheit in zwei Arbeitsphasen entleert werden.

In der 1. Arbeitsphase wird die Bodenfläche der Baueinheit über die feste Bodenfläche des Anhängers bis zum hinteren Rand dieser festen Bodenfläche hin verschoben. Die Ladefläche des Anhängers wird dabei halbiert. Die hintere Hälfte des Ladegutes wird über den hinteren Rand des Anhängers hinausgeschoben und entleert.

In der 2. Arbeitsphase wird die bewegliche Stirnwand relativ zur Bodenfläche der Baueinheit ebenfalls in Richtung zum hinteren Ende des Anhängers hin verschoben. Dabei erfolgt die vollständige Entleerung des Anhängers.

Durch die Teilung der Ladefläche in einen starren, fest mit dem Fahrgestell verbundenen Teil und einen beweglichen Teil in Form der verschiebbaren Bodenfläche der Baueinheit wird der Kraftbedarf zum Entleeren des Anhängers verringert, da zunächst nur die eine Hälfte des Ladegutes abgeschoben werden muß und die Verschiebebewegung der Bodenfläche der Baueinheit über die feste Bodenfläche des Anhängers nur einen geringen Kraftaufwand benötigt, da die Reibung zwischen den beiden übereinander gleitenden Bodenflächen geringer ist, als das Verschieben des gesamten Ladegutes über die ruhende Bodenfläche.

Infolge der Unterteilung der Ladegutbewegung wird auch das bekannte nachteilige Überquellen des Ladegutes über die Seitenränder des Anhängers vermieden.

Ein besonderer Vorteil der erfindungsgemäßen Konstruktion der Baueinheit zeigt sich aber beim Beladen des Anhängers mit Paletten. Jetzt ist es möglich, für den Beladevorgang zunächst den beweglichen Boden, das heißt, die Bodenfläche der Baueinheit ganz bis zum hinteren Rande des Anhängers zu verschieben, sodann auf diesen beweglichen Boden die Palette aufzustellen und dann den beweglichen Boden mit der Palette zur Stirnseite des Anhängers hin zu verschieben. Auf die jetzt frei gewordene Fläche des festen Bodens des Anhängers, das heißt der ersten Bodenfläche kann dann eine weitere Palette aufgesetzt werden, so dass eine vollständige Beladung des Anhängers möglich ist.

Gemäß einer vorteilhaften Ausbildung der Baueinheit umfaßt die Betätigungseinrichtung zwei hydraulisch steuerbare Kolben- Zylinderaggregate, wobei das erste Kolben-Zylinderaggregat zwischen der Stirnwand und der verschiebbaren Bodenfläche der Baueinheit liegt und das zweite Kolben-Zylinderaggregat mit der verschiebbaren Bodenfläche der Baueinheit einerseits verbunden und andererseits an der Bodenfläche des fahrbaren Anhängers anlenkbar ist. Dabei ist vorzugsweise für die Verbindung des ersten Kolben-Zylinderaggregats mit der Stirnwand ein Umlenkhebelgestänge vorgesehen. Hierdurch wird vermieden, dass die Kolbenstange des zweiten Zylinders über die gesamte Länge des Anhängers hin ausgefahren werden muss.

Weitere Einzelheiten der Erfindung ergeben sich aus den Unteransprüchen und der nachstehenden Beschreibung von Ausführungsbeispielen anhand der Zeichnung.

Hierin zeigen:
- Fig. 1: einen Längsschnitt durch die Symmetrieachse eines Anhängers, auf dem die erfindugsgemäße Baueinheit aufliegt, in schematischer Darstellung,
- Fig. 2: eine Seitenansicht der erfindungsgemäßen Baueinheit, die mit dem Boden eines Anhängers verbunden ist,
- Fig. 3: eine Seitenansicht einer anderen Ausbildung der erfindungsgemäßen Baueinheit, die mit dem Boden eines Anhängers verbunden ist,

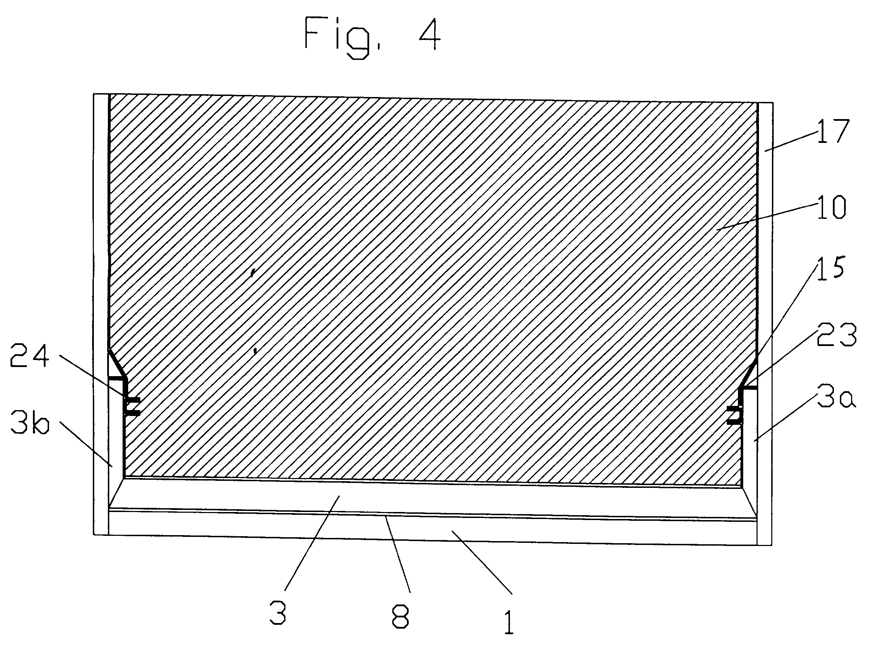

- Fig. 4: einen Querschnitt durch den Ladebereich eines Anhängers mit Blickriehtung auf die bewegliche Stirnwand der erfindungsgemäßen Baueinheit, mit einer seitlichen Gleitführung.

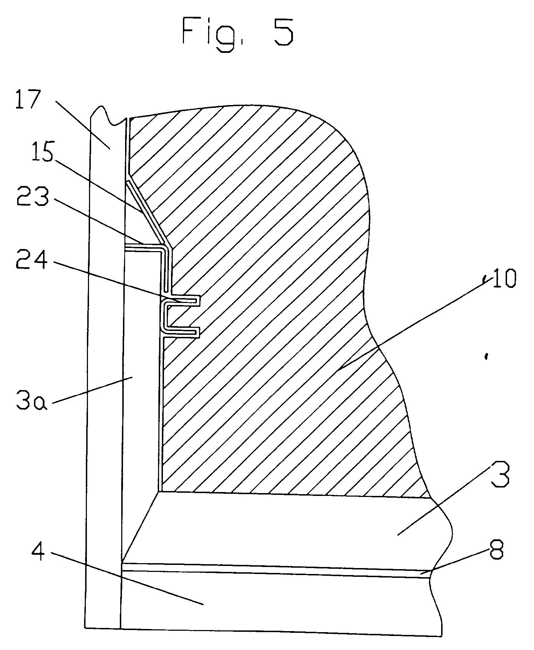

- Fig. 5: einen Auschnitt aus Fig. 4 in vergrößerter Darstellung,
- Fig. 6: einen Längsschnitt durch den Anhänger, der die seitliche Gleitführung von beweglichem Boden und beweglicher Stirnwand erkennen läßt.

Sich entsprechende Teile sind in den Figuren mit übereinstimmenden Bezugszeichen gekennzeichnet.

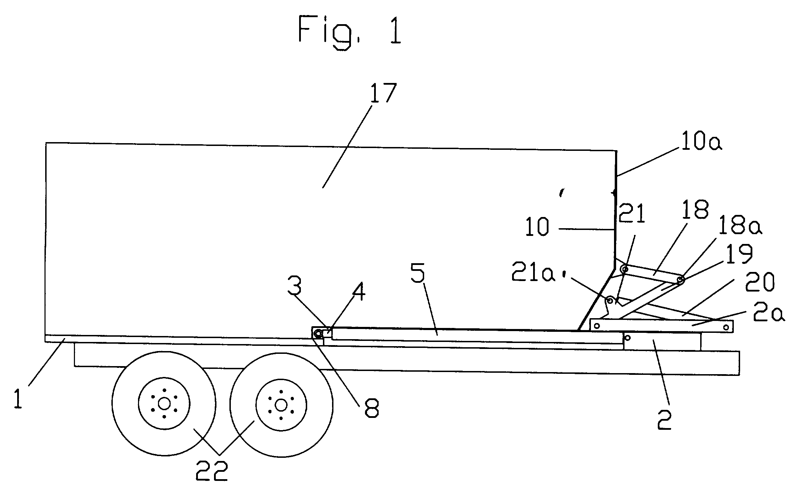

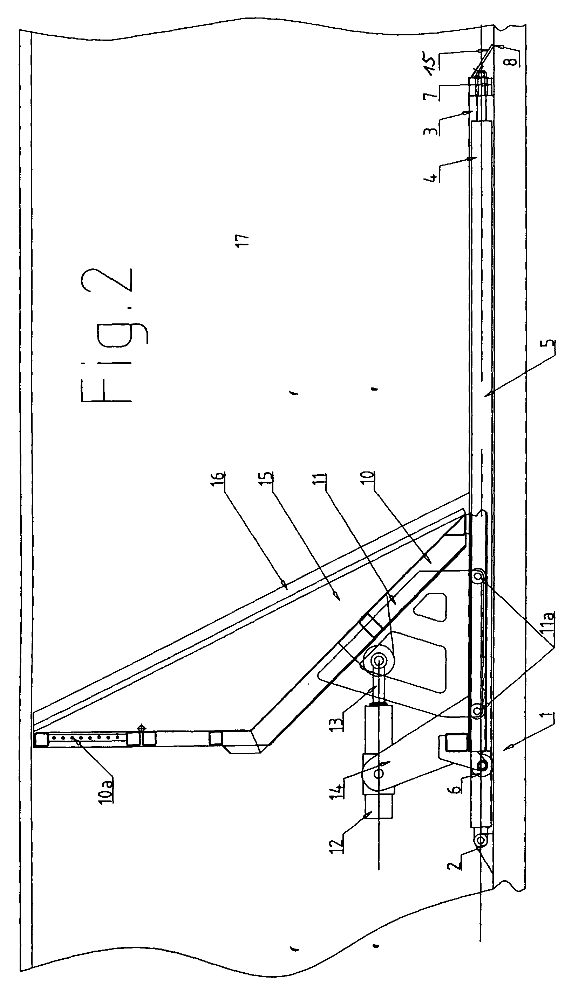

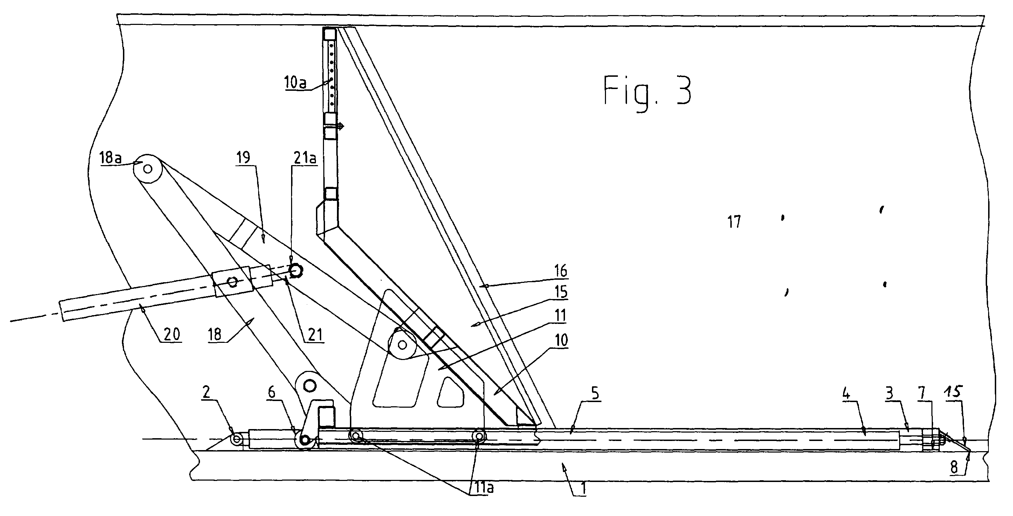

In Fig. 1 ist ein Anhänger gezeigt, der von Anfang an als Verschiebeanhänger der erfindungsgemäßen Art ausgebildet ist. Zwei Ausbildungen einer zur Nachrüstung eines üblichen Anhängers geeignete Baueinheiten sind in Seitenansicht in den Fig. 2 und 3 gezeigt und sollen, da hier das Konstruktionsprinzip der Baueinheit klar ersichtlich ist, zunächst beschrieben werden.

Auf einem Boden 1 eines üblichen Anhängers wird bei 2 die zur Nachrüstung bestimmte Baueinheit mit dem Anhängerboden 1 verbunden.
Die Baueinheit umfaßt einen Verschiebeboden 3, der mittels des Kolbenzylinderaggregates 4,5 in Längsrichtung des Anhängerbodens 1 verschiebbar ist. Der Verschiebeboden 3 ist über eine Stützrolle 6 auf dem Anhängerboden 1 abgestützt. Bei Betätigung des Kolbenzylinderaggregats 4,5 rollt der Verschiebeboden 3 über den Anhängerboden 1. Im Bereich seiner zum hinteren Ende des Anhängers weisenden Kante 7 befindet sich auf der Unterseite des Verschiebebodens 3 ein Gleitauflager 8. Ferner ist an der Kante 7 ein Schürfgummi 9 vorgesehen, der die Aufgabe hat, Reste des Ladegutes wegzuschieben, um zu verhindern, dass dieses in den Bereich des Kolben-Zylinderaggregates 4,5 eindringen könnte.

Eine abgewinkelt ausgebildete Stirnwand 10, deren vertikales oberes Ende 10a hier abklappbar ausgebildet ist, ist von einem als Rollwagen 11 ausgebildeten Träger gehalten und zusammen mit diesem Rollwagen 11 längs des Verschiebebodens 3 verschiebbar.

Hierzu dient nach Fig.2 ein Kolben-Zylinderaggregat, das als Teleskopzylinder 12,13 dargestellt ist. Der Kolben 13 ist mit der Stirnwand 10 und der Zylinder 12 über einen Arm 14 mit dem Verschiebeboden 3 verbunden. Auf diese Weise läßt sich die Stirnwand 10 über den Verschiebeboden 3 zum hinteren Ende des Anhängers verschieben.

Die Stirnwand 10 trägt seitliche Leisten 16, an deren freiem Rand seitliche Schürfgummilappen 15 angeordnet sind, die während der Verschiebung der Stirnwand 10 längs der festen Seitenwand 17 des Anhängers entlanggleiten.

Die beschriebene Baueinheit ist, wie aus der Zeichnung ersichtlich, in einfacher Weise nur bei 2 auf dem festen Boden 1 des Anhängers zu arretieren, um jeden bereits vorhandenen Anhänger zu einem Verschiebeanhänger umzurüsten.

Eine weitere Ausbildung der erfindungsgemäßen Baueinheit ist in Fig.3 gezeigt. Anstelle des Teleskopzylinders 12,13 bei der Ausfährungsform nach Fig. 2 ist hier ein Umlenkhebelgestänge 18,19 vorgesehen, welches mittels eines Kolben-Zylinderaggregates 20,21 betätigt wird. Dabei ist der Kolben 21 mit dem einen Hebelarm 19 und der Zylinder 20 mit dem Hebelarm 19 verbunden. Die Funktionsweise wird nachstehend im Zusammenhang mit der Beschreibung der Arbeitsweise des Verschiebeanhängers näher beschrieben.

In Fig. 1 ist der Anhängerboden 1 von einem Fahrgestell mit Rädern 22 getragen. Die beiden sich gegenüberliegenden Seitenwände 17 sind starr mit dem Boden 1 verbunden. Auf dem Boden 1 befindet sich zur Verbesserung der Gleitfähigkeit eine Polyamidschicht 5. Die Fläche des Bodens 1 erstreckt sich etwa über die hintere Hälfte des Anhängerrahmens.

Ein längs der Seitenwände 17 über die feste Bodenfläche 1 verschiebbarer Boden 3 ist in seinem mittleren Bereich mit der Kolbenstange 4 eines Hydraulikzylinders 5verbunden, der seinerseits in einer Halterung 2am Rahmen befestigt ist. Der verschiebbare Boden 3 ist hier als U-Profil mit Längsseitenteilen 3a,b ausgebildet. Die Seitenteile 3a,b sind in Führungsschienen 23, die sich längs der starren Seitenwände 17 erstrecken, geführt. Die Seitenteile 3a,b tragen zum Anhängerinneren hin gerichtete, in ihrer Längsrichtung verlaufende U-Profilschienen 24 für die bewegliche Stirnwand 10 des Anhängers. Die Stirnwand 10 verläuft quer über die Breite des verschiebbaren Bodens 3 und ist in der U-Profilschiene 24 geführt. Sie kann mit Hilfe des Hydraulikzylinders 20,21 längs des verschiebbaren Bodens 3 verschoben werden. Der Hydraulikzylinder 20 ist an einer Halterung 2a, die fest mit der Halterung 2 verbunden ist, angelenkt. Der Kolben 21 betätigt das Hebelgestänge, bestehend aus zwei gelenkig bei 18a miteinander verbundenen Hebelarmen 18 und 19. Das Ende des Hebelarmes 19 ist gelenkig mit der Halterung 2a verbunden. Das Ende des Hebelarmes 18 ist an der Stirnwand 10 angelenkt. Der Kolben 21 betätigt über seine Gelenkverbindung 21a mit dem Hebelarm 19 das Hebelgestänge 18,19 so, dass beim Ausfahren des Kolbens 21 sich die Winkelstellung der beiden Hebelarme 18,19 schließlich bis nahezu in eine gestreckte miteinander fluchtende Stellung gelangen. Die Längen der Hebelarme 18,19 sind dabei so bemessen, dass die Stirnwand 10 bei vollständig ausgefahrenem Kolben 21 und gestreckten Hebelarmen 18,19 längs der Seitenwände 3a,b bis zum hinteren Ende des Anhängers verschoben wird. Durch die beschriebene Umlenkeinrichtung wird der Vorteil erreicht, dass der Kolbenhub des Zylinders 20 stark verringert wird und die für die Kolbenbewegung erforderliche Kraft wesentlich geringer ist, als sie bei Verwendung von Teleskopzylindern der Fall wäre. Diese Erleichterung wird auch durch die Arbeitsteilung auf zwei Zylinderaggregate unterstützt, wobei besonders zu beachten ist, dass auch der Kolbenhub des Kolben 4 gegenüber Teleskopzylindern nur noch der Hälfte der Anhängerlänge entspricht.

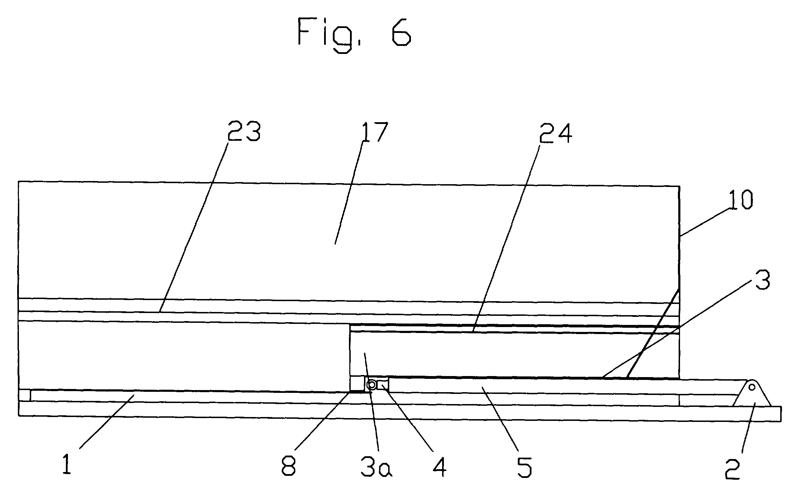

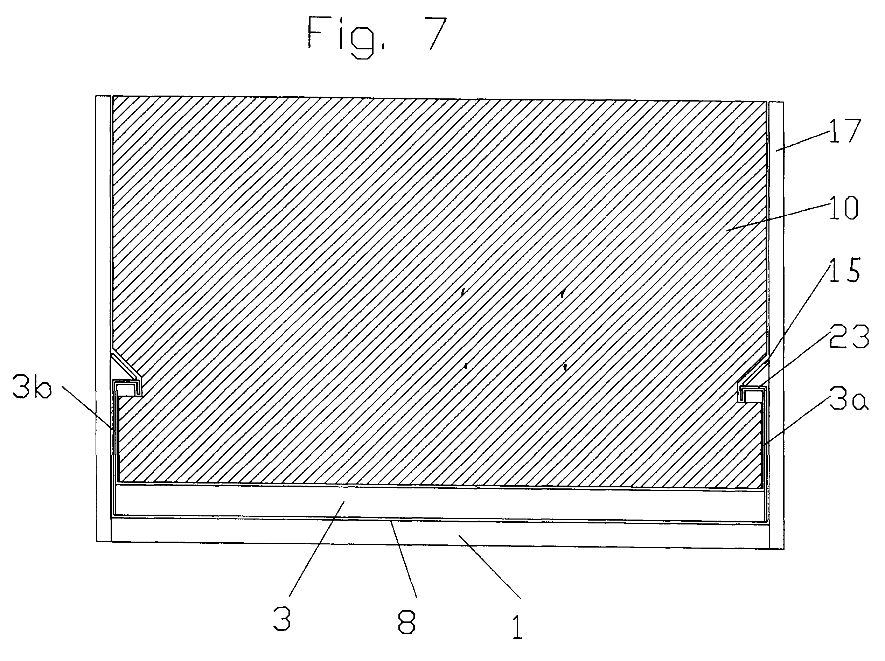

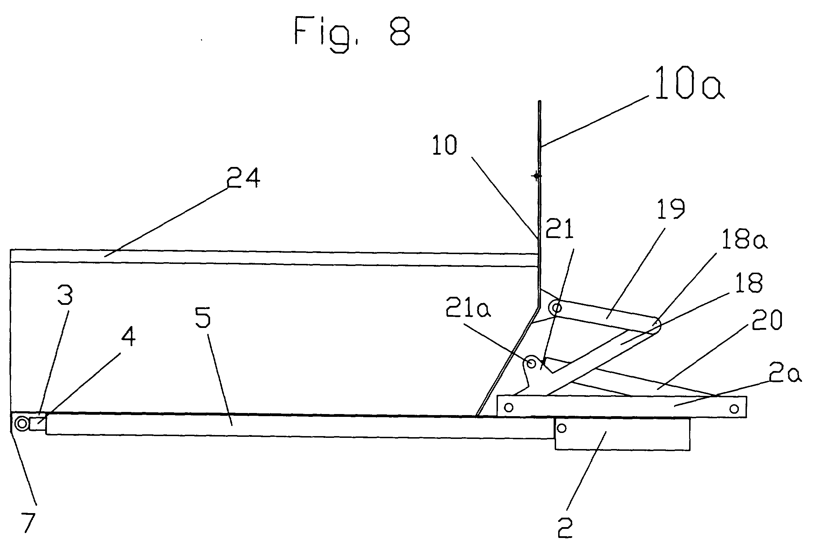

Aus Fig.6 ist erkennbar, wie bei dem gewählten Ausführungsbeispiel der Zylinder 5 mit Kolben 4 innerhalb einer unteren Ausnehmung eines verschiebbaren Bodens angeordnet ist. Ferner sind die Führungsschienen 24 für die Stirnwand 10, die längs der Schenkel 3a,b des verschiebbaren Bodens 3 verlaufen und die Führungsschienen 23, die längs der starren Seitenwände 17 verlaufen, erkennbar.

Die Freiräume zwischen den starren Seitenwänden 17 und der verschiebbaren Stirnwand 10 sind mit Gummilappen 15 abgedichtet, die auf die bewegliche Stirnwand 10 montiert sind. Vor Beginn des Be- oder Entladevorganges muss natürlich die Rückwand 20 des Anhängers, die im Beispiel bei 19 am festen Boden 1 angelenkt ist, entfernt und nach unten verschwenkt werden. Sodann kann der zweistufige Entladevorgang oder Beladevorgang wie vorstehend beschrieben durchgeführt werden.

Der Entladevorgang soll nun im folgenden in Bezug auf die Zeichnung nochmals erläutert werden.

Zunächst wird die Rückwand 20 des Anhängers abgeklappt oder entfernt. Die Kolbenstange 4 fährt aus und verschiebt die bewegliche Bodenfläche 3 über die mit Polyamid beschichtete feste Bodenfläche 1, bis der hintere Rand der beweglichen Bodenfläche 3 etwa am hinteren Rand des Anhängers, das heißt dem hinteren Rand der festen Bodenfläche 1 angelangt ist.

Gleichzeitig fährt aber auch der Kolben 21 des Zylinders 20 aus und verändert die Winkelstellung des Umlenkgestänges 18,19. Die Hälfte des Ladegutes fällt nun über den hinteren Rand des Anhängers herab.

Sodann fährt der Kolben 21 des Zylinders 20 aus, der Winkel zwischen den Hebelarmen 18 und 19 vergrößert sich bis nahezu 180°. Dadurch wird die Stirnwand 10 längs der in den Seitenwänden 3a,b der beweglichen Bodenfläche 3 vorgesehenen Führungsschienen 24 bis zum hinteren Ende des Anhängers hin verschoben und dabei die gesamte ladung entleert.

Beim Beladen des Anhängers mit Paletten befindet sich zunächst der verschiebbare Boden 3 im Bereich der hinteren Hälfte des Anhängers, die bewegliche Stirnwand 10 befindet sich in der Mitte der Ladefläche, also am stirnseitigen Ende der verschiebbaren Bodenfläche 3. Die Palette wird auf die bewegliche Bodenfläche 3 aufgesetzt und zusammen mit der Bodenfläche 3 in Richtung Stirnseite des Anhängers gefahren. Dabei wird die hintere Hälfte der festen Bodenfläche 1 frei für die Aufnahme einer weiteren Palette.

## Patentansprüche

1. Baueinheit für einen fahrbaren Anhänger, **gekennzeichnet durch** eine Bodenfläche (3) mit einer relativ zu dieser in ihrer Längsrichtung verschiebbaren Stirnwand (10) und Betätigungseinrichtungen (4,5,12,13,20,21) für die Verschiebung der Stirnwand (10) relativ zur Bodenfläche (3) einerseits und für die Verschiebung der Bodenfläche (3) relativ zu der Bodenfläche eines Anhängers, mit dem die Baueinheit verbindbar ist.

2. Baueinheit nach Anspruch 1, **dadurch gekennzeichnet**, dass die Betätigungseinrichtungen hydraulischer Art sind.

3. Baueinheit nach Anspruch 1 oder 2, **dadurch gekennzeichnet**, dass die Betätigungseinrichtungen zwei Kolben-Zylinderaggregate (4,5,12,13,20,21) umfassen, wobei das erste Kolben-Zylinderaggregat (1,2,13,20,21) zwischen der Stirnwand (10) und der verschiebbaren Bodenfläche (3) der Baueinheit liegt und das zweite Kolben-Zylinderaggegat (4,5) mit der verschiebbaren Bodenfläche (3) der Baueinheit einerseits verbunden und andererseits an der Bodenfläche (1) des fahrbaren Anhängers anlenkbar ist.

4. Baueinheit nach einem der vorhergehenden Ansprüche, **dadurch gekennzeichnet**, dass das erste Kolben-Zylinderaggregat (20,21) über ein Umlenkhebelgestänge (18,19) mit der Stirnwand (10) verbunden ist.

5. Baueinheit nach einem der vorhergehenden Ansprüche, **dadurch gekennzeichnet**, dass das erste Kolben-Zylinderaggregat (12,13) einen mehrstufigen Teleskopzylinder umfaßt.

6. Baueinheit nach einem der vorhergehenden Ansprüche, **dadurch gekennzeichnet,** dass die Bodenfläche (3) der Baueinheit mit Gleitrollen (6) verbunden ist, deren Achse(n) quer zur Verschieberichtung der Bodenfläche verlaufen.

7. Baueinheit nach einem der vorhergehenden Ansprüche, **dadurch gekennzeichnet**, dass die Stirnwand (10) mit Gleitrollen (11a) versehen ist.

8. Baueinheit nach einem der vorhergehenden Ansprüche,**dadurch gekennzeichnet**, dass die Gleitrollen (11a) mit einem Rollwagen (11) verbunden sind, der als Träger für die Stirnwand (10) und in Längsrichtung der Bodenfläche (3) der Baueinheit verschiebbar ist.

9. Baueinheit nach einem der vorhergehenden Ansprüche, **dadurch gekennzeichnet**, dass die Bodenfläche (3) der Baueinheit auf ihrer Unterseite mit einem Gleitbelag (8) geringer Reibung versehen ist.

10. Baueinheit nach einem der vorhergehenden Ansprüche, **dadurch gekennzeichnet**, dass der Gleitbelag (8) aus Polyamid besteht.

11. Baueinheit nach einem der vorhergehenden Ansprüche, **dadurch gekennzeichnet**, dass die Stirnwand (10) in an der Bodenfläche (3) der Baueinheit vorgesehenen Gleitschienen (24) verschiebbar ist.

12. Baueinheit nach einem der vorhergehenden Ansprüche, **dadurch gekennzeichnet**, dass an der Stirnwand (10) Gummilappen (15) angeordnet sind.

13. Fahrbarer Anhänger, **dadurch gekennnet**, dass auf seiner Bodenfläche (1) eine Baueinheit nach einem der Ansprüche 1 bis 13 angelenkt ist.

14. Anhänger nach Anspruch 13, **dadurch gekennzeichnet**, dass an den Seitenwänden (17) der Bodenfläche (1) des Anhängers Führungsschienen (10) für die Bodenfläche (3) der Baueinheit vorgesehen sind.

15. Anhänger nach Anspruch 13 oder 14, **dadurch gekennzeichnet**, dass die sich zwischen den Seitenwänden (17) des Anhängers und der beweglichen Stirnwand (10) und/oder die zwischen den Seitenwänden (17) des Anhängers und der verschiebbaren Bodenfläche (3) der Baueinheit ergebenden Freiräume mit Gummilappen (15) abgedeckt sind, die beidseitig an der Stirnwand (10) bzw. den verschiebbaren Boden (3) der Baueinheit angeordnet sind.

16. Anhänger nach einem der Ansprüche 14 bis 16, **dadurch gekennzeichnet**, dass die Rückwand (20) des Anhängers schwenkbar mit den Seitenwänden (17) des Anhängers verbunden sind.
